# EUROPÄISCHE PATENTANMELDUNG

(11) **EP 1 203 555 A2**
(43) Veröffentlichungstag der Anmeldung: **08.05.2002**
(21) Anmeldenummer: 01126151.8
(22) Anmeldetag: 02.11.2001
(51) Int. Cl.: A47J 37/07

(54) **Grilleinrichtung, insbesondere Haubengrill, Kugelgrill oder dergleichen**

(30) Priorität: 03.11.2000 DE 20018769 U; 02.12.2000 DE 20020473 U
(71) Anmelder: Landmann-Peiga GmbH & Co. KG, 27711 Osterholz-Scharmbeck (DE)
(72) Erfinder: Seuren, Günther, 27711 Osterholz-Scharmbeck (DE)
(74) Vertreter: Möller, Friedrich, Dipl.-Ing.

(57) **Zusammenfassung**

Insbesondere bei Kugelgrills besteht das Problem, dass Asche oder auch Glut durch Luftzufuhröffnungen (17) nach außen gelangt. Um das zu vermeiden, wird ein Kugelgrill vorgeschlagen, der im Bodenbereich des Unterteils (14) des Gehäuses ein Ascheauffangblech (19) aufweist. Das Ascheauffangblech (19) überdeckt von außen in das Unterteil (14) des Gehäuses einmündende Luftzufuhröffnungen (17). Die Luft kann durch Durchbrüche (23) in einer nahezu senkrecht umlaufenden Randwandung (21) des Ascheauffangblechs (19) in das Innere des Gehäuses gelangen. Die Durchbrüche (23) in der im Wesentlichen senkrechten Randwandung (21) verhindern dabei, dass Asche undGlut durch die Luftzufuhröffnungen (17) nach außen gelangen können.

## Beschreibung

Die Erfindung betrifft eine Grilleinrichtung, insbesondere einen Haubengrill, Kugelgrill oder dergleichen, gemäß dem Oberbegriff des Anspruchs 1. Weiterhin betrifft die Erfindung eine Grilleinrichtung gemäß den Oberbegriffen der Ansprüche 7 und 11.

Derartige Grilleinrichtungen sind in der Praxis weitgehend verbreitet, beispielsweise als Haubengrills, Kugelgrills, Säulengrills, Trichtergrills oder Grillfässer. Trotz der zahlenmäßig hohen Verbreitung derartiger Grilleinrichtungen und einer damit einhergehenden fortgeschrittenen Entwicklung, werden bei der Benutzung der Grilleinrichtungen immer wieder Mängel bzw. nachteilige Konstruktionen offenbar.

Hiervon ausgehend liegt der vorliegenden Erfindung die Aufgabe zugrunde, Grilleinrichtungen der eingangs genannten Art weiterzuentwickeln und insbesondere hinsichtlich der Alltagstauglichkeit zu verbessern.

Eine Grilleinrichtung zur Lösung dieser Aufgabe weist die Merkmale des Anspruchs 1 auf. Durch die Anordnung eines Mittels zur Aufnahme von Asche und/oder Glut im Gehäuse wird verhindert, dass derartige Stoffe durch eine oder mehrere Luftzufuhröffnungen aus dem Gehäuse herausfallen. Gerade im Bezug auf die Glut stellt diese eine beträchtliche Erhöhung der Betriebssicherheit der Grilleinrichtung dar, denn auf diese Weise wird sichergestellt, dass Glut außerhalb des Gehäuses lagemde Stoffe nicht entzündet. Zudem ist es nunmehr möglich unterhalb des Gehäuses derartiger Grilleinrichtungen Stoffe, insbesondere Grillgut, zu lagern, ohne dass dieses durch aus dem Grill herausfallende Asche verschmutzt, oder durch Glut in Brand gesetzt werden. Vorzugsweise ist das Mittel, insbesondere ein Ascheauffangblech, im Bereich zwischen der oder mindestens einer Luftzufuhröffnung und einer Ablage, insbesondere einem Kohlerost, für Brennstoffe angeordnet. Auf diese Weise wird die Asche bzw. Glut schon unmittelbar unterhalb der Brennstoffablage aufgefangen.

In einer bevorzugten Ausführungsform der Erfindung überdeckt das Mittel vorzugsweise alle Luftzufuhröffnungen oberseitig, und zwar ohne sie zu verschließen. Somit wird sichergestellt, dass sich das Mittel möglichst über den gesamten Bereich der Luftzufuhröffnungen erstreckt und damit eine Hindurchfallen von Asche und/oder Glut durch die oder jede Luftzufuhröffnung zu verhindern; aber gleichwohlt lässt das Mittel eine im Wesentlichen ungehinderte Luftströmung durch die jeweilige Luftzufuhröffnung zu.

Gemäß einer bevorzugten Weiterentwicklung der Erfindung ist die Grundrissgestalt des Mittels an den Grundriss des Gehäuses angepasst. Auf diese Weise kann das Mittel einfach in die Grilleinrichtung integriert werden. Vorzugsweise ist das Mittel zudem am Gehäuse gelagert. In einer einfachen Ausführungsform kann das Mittel, beispielsweise ein flaches Ascheauffangblech, im Gehäuse (auf-)liegen. In einer bevorzugten Ausführungsform liegt das Mittel mindestens bereichsweise umlaufend an der Innenseite des Gehäuses an und weist mindestens einen Durchbruch auf. Derart ausgebildet und angeordnet trennt das Mittel einen Brennraum, nämlich den Bereich des Grills, indem die Brennstoffe verbrannt werden, von den Luftzufuhröffnungen. Um weiterhin zu gewährleisten, dass Luft in den Brennraum strömen kann, sind vorzugsweise mehrere Durchbrüche dem Mittel zugeordnet.

Vorzugsweise ist das Mittel mindestens teilweise muldenförmig ausgebildet, beispielsweise nach Art eines Tellers. Je nach Ausführung ergibt sich somit ein mehr oder weniger großer Aufnahmeraum für die herabfallende Asche bzw. Glut. In einer bevorzugten Ausführungsform ist eine vorzugsweise umlaufende Randwandung des Mittels insbesondere gegenüber dem muldenförmig ausgebildeten Bereich abgewinkelt, und zwar derart, dass es senkrecht oder leicht zur Senkrechten geneigt ist. In diesem Bereich sind vorzugsweise die Durchbrüche angeordnet. Ihre Längsachsen verlaufen dadurch horizontal oder leicht zur Horizontalen geneigt. Auf diese Weise steht für in den Brennraum zuströmende Luft der volle Querschnitt der Durchbrüche zur Verfügung, wohingegen für herabfallende Asche bzw. Glut lediglich eine kleinere Fläche, nämlich lediglich entsprechend der Größe der vertikalen Projektionsfläche der Durchbrüche, zur Verfügung steht. Überraschenderweise hat sich gezeigt, dass sowohl die Asche als auch die Glut bei einer derartigen Ausrichtung der Randwandung nicht durch die Durchbrüche fällt, sondern im muldenförmigen (mittleren) Bereich des Mittels sich sammelt und dadurch zuverlässig im Gehäuse verbleibt.

Eine weitere Grilleinrichtung zur Lösung der eingangs genannten Aufgabe weist die Merkmale des Anspruchs 7 auf, wonach im Gehäuse mehrere Auflagemittel zur Aufnahme der Ablage, beispielsweise einem Kohlerost, vorgesehen sind und wobei vorzugsweise mindestens ein Auflagemittel an je einem Halter angeordnet ist und wobei die Auflagemittel und/oder die Halter insbesondere lösbar mit dem Gehäuse verbindbar sind. Die Auflagemittel erlauben eine einfache Anordnung der Ablage im Grill. Insbesondere ein Verrutschen der Ablage kann auf diese Weise wirksam verhindert werden.

Gemäß einer weiteren Lösung der eingangs genannten Aufgabe weist eine Grilleinrichtung die Merkmale des Anspruchs 11 auf, wobei Brennstoff in mindestens einem Behälter angeordnet ist, der auf einer Ablage für Brennstoffe und/oder auf einer Ablage für Grillgut aufliegt. Die Anordnung des Brennstoffs in einem oder mehreren Behältern ermöglicht die zielgerichtete Positionierung desselben in Relation zum Grillgut. Insbesondere lässt sich durch die Behälter ein Freiraum für Grillgut bilden und ein Kontakt des Grillguts mit Brennstoff zuverlässig verhindern. Durch entsprechende Anordnung des oder der Behälter auf der Ablage kann das Grillgut direkt und/oder indirekt erhitzt werden. Je nach Art des Grillguts können die Behälter jeweils derart angeordnet werden, dass dieses optimal gegart wird.

Weitere vorteilhafte Ausgestaltungen der vorstehend beschriebenen Grilleinrichtungen sind in den Unteransprüchen und der Beschreibung dargelegt.

Ein bevorzugtes Ausführungsbeispiel der erfindungsgemäßen Grilleinrichtung wird nachfolgend anhand der Zeichnung näher erläutert. In dieser zeigen:
Fig. 1 Bestandteile einer Grilleinrichtung in zerlegter, perspektivischer Darstellung,
Fig. 2 eine Draufsicht auf eine Grilleinrichtung in teilweiser Darstellung,
Fig. 3 einen Vertikalschnitt III-III durch die Grilleinrichtung gemäß Fig. 2,
Fig. 4 eine Grilleinrichtung mit einem Auflagemittel und
Fig. 5 eine Grilleinrichtung mit Auflagemitteln und Haltern.

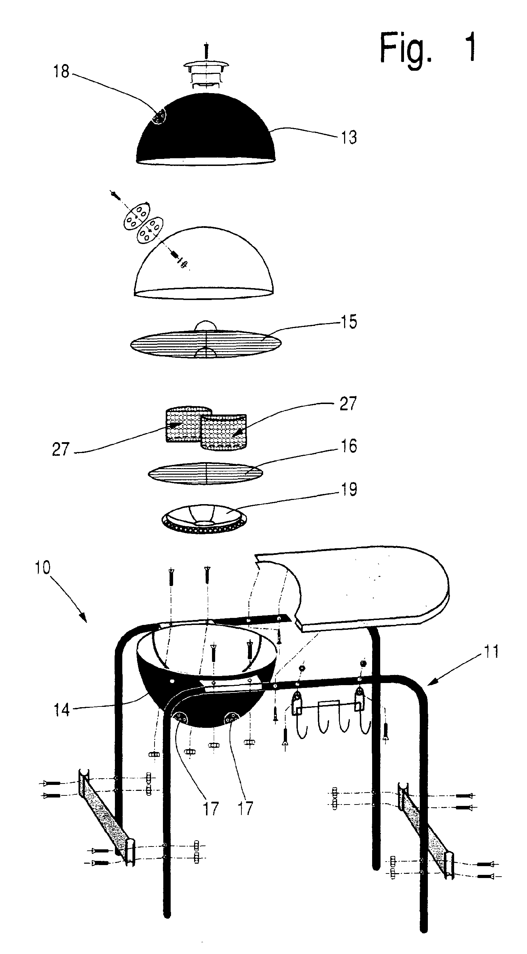

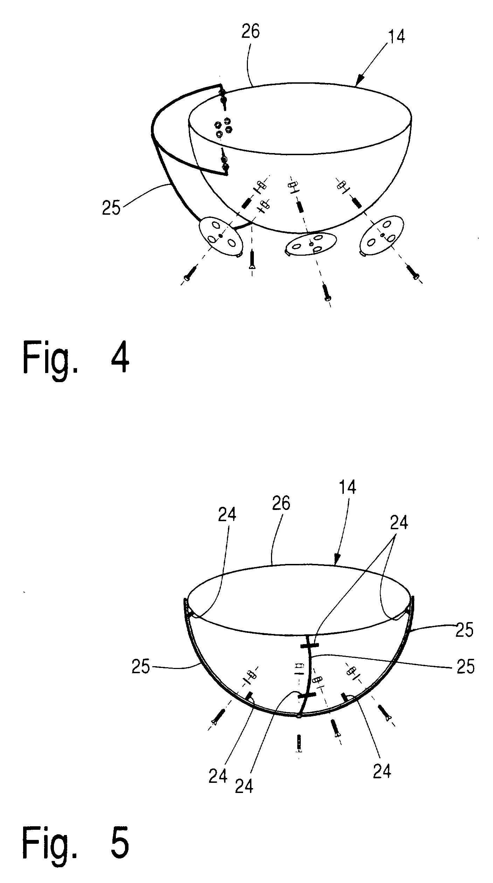

Bei der in den Fig. 1 bis 5 dargestellten Grilleinrichtung handelt es sich um einen sogenannten Kugelgrill 10. An diesem Kugelgrill 10 soll stellvertretend für beispielsweise alle anderen eingangs genannten Grill-Typen die Erfindung erläutert werden.

Der Kugelgrill 10 ist in ein Gestell 11 integrierbar und zur Verwendung im Freien gedacht, wobei als Brennstoff bevorzugt Holzkohle zum Einsatz kommt. Ein Gehäuse 12 des Kugelgrills 10 besteht aus zwei Teilen, nämlich einem Deckel beziehungsweise Oberteil 13 und einem Unterteil 14. Das Gehäuse 12 ist nach Art einer Kugel gestaltet, wobei Oberteil 13 und Unterteil 14 jeweils eine Hälfte eines kugelartigen Körpers bilden. Der Kugelgrill 10 kann sowohl mit geöffnetem Gehäuse 12, also lediglich mit dem Unterteil 14, betrieben werden, als auch mit geschlossenem Gehäuse 12, wobei das Oberteil 13 auf das Unterteil 14 aufgesetzt ist. Im letzteren Fall eignet sich der Kugelgrill 10 zum Garen von Fleisch, das relativ lange gegart werden muss.

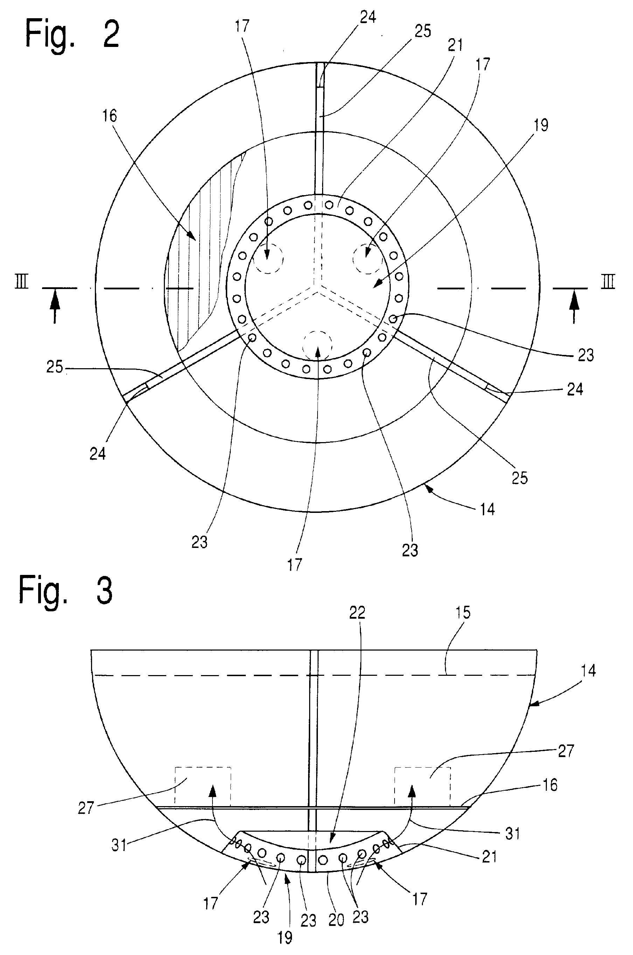

Im Unterteil 14 ist eine Ablage für Grillgut, nämlich ein Grillrost 15, und darunter eine Ablage für Brennstoffe, nämlich ein Kohlerost 16, in vertikal voneinander abgesetzten Ebenen übereinander positionierbar (Fig. 3). Der Grillrost 15 und der Kohlerost 16 erstreckt sich jeweils im Wesentlichen über die jeweilige gesamte Grundrissfläche des Unterteils 14.

Als Besonderheit weisen die Grill-Typen der eingangs genannten Art im unteren Bereich, bzw. an der Unterseite des Gehäuses 12 eine oder - im gezeigten Ausführungsbeispiel - mehrere verschließbare Luftzufuhröffnungen 17 auf. Durch die Luftzufuhröffnungen 17 kann Außenluft in das Innere des Kugelgrills 10 einströmen. Durch entsprechende Abluftöffnungen 18 im Oberteil 13 des Gehäuses 12 kann die Luft wieder aus dem Gehäuse 12 herausströmen. Der so erzeugte Luftstrom 31 kann durch den Öffnungsgrad der Luftzufuhröffnungen 17 und Abluftöffnungen 18 reguliert werden. Die Anzahl und die Anordnung der Luftzufuhröffnungen 17 und Abluftöffnungen 18 kann an die Gestalt des jeweiligen Gehäuses 12 angepasst sein. Insofern sind die drei im Bodenbereich des Unterteils 14 angeordneten Luftzufuhröffnungen 17, sowie eine einzige Abluftöffnung 18 exemplarisch dargestellt.

Eine Besonderheit des Kugelgrills 10 besteht darin, dass im Inneren des Gehäuses 12 ein Mittel zur Aufnahme von Asche und/oder Glut, nämlich ein Ascheauffangblech 19 angeordnet ist. Das Ascheauffangblech 19 dient dazu aus der Ebene des Kohlerosts 16 herabfallende Asche bzw. Glut aufzufangen und zu verhindern, dass diese durch die Luftzufuhröffnungen 17 aus dem Gehäuse 12 herausfallen. Hierzu ist das Ascheauffangblech 19 unterhalb des Kohlerosts 16 und oberhalb der Luftzufuhröffnungen 17 angeordnet und in der Größe derart bemessen, dass die Luftzufuhröffnungen 17, und zwar vorzugsweise alle, vollständig durch das Ascheauffangblech 19 überdeckt werden.

Das Ascheauffangblech 19 ist im Grundriss an das Gehäuse 12 des Kugelgrills 10 angepasst, nämlich mit einem entsprechenden, kreisförmigen Grundriss. Das Ascheauffangblech 19 kann wie im gezeigten Beispiel aus einem dünnwandigen Blech, oder einem anderen, vorzugsweise hitzebeständigen, Werkstoff geformt sein. Das Ascheauffangblech 19 ist im gezeigten Ausführungsbeispiel auf einem Boden 20 des Unterteils 14 angeordnet. Hierzu kann das Ascheauffangblech 19 im einfachsten Fall im Bereich der Luftzufuhröffnungen 17 auf den Boden 20 des Unterteils 14 aufgelegt sein, wobei es eine Durchströmung der Luftzufuhröffnungen 17 mit Zuluft noch zulässt. Alternativ sind beispielsweise spezielle Halterungen für das Ascheauffangblech 19 denkbar. Im gezeigten Ausführungsbeispiel liegt das Ascheauffangblech 19 randseitig umlaufend auf dem Boden 20 des Unterteils 14 auf, und zwar mit dem unteren Rand einer umlaufend kragenartig ausgebildeten Randwandung 21. Dazu ist die Randwandung 21 des Ascheauffangblechs 19 zum Boden 20 hin abgewinkelt, verläuft nämlich schräg gerichtet nach unten. Die Randwandung 21 kann auch senkrecht gerichtet sein, ist dann als zylindrisch ausgebildet.

Damit das Ascheauffangblech 19 die Luftzufuhr zum Inneren des Gehäuses 12 nicht beeinträchtigt, sind Durchbrüche 23 im Ascheauffangblech 19 vorgesehen. Die Durchbrüche 23 sind im gezeigten Ausführungsbeispiel in der abgewinkelten Randwandung 21 angeordnet, und zwar mit Abstand oberhalb des auf dem unteren Bereich des Gehäuses 12 anliegenden unteren Randes der Randwandung 21. Die Durchbrüche 23 sind über die Randwandung 21 verteilt, wobei sowohl eine gleichmäßige Anordnung der Durchbrüche 23 möglich ist, als auch eine gezielte Anordnung oder Häufung im Bereich der Luftzufuhröffnungen 17. Die Anordnung der vorzugsweise aus zylindrischen Durchgangsbohrungen gebildeten Durchbrüche 23 in der leicht schräg oder senkrecht gerichteten Randwandung 21 weist den Vorteil auf, dass zur Durchleitung der Luft der volle Querschnitt der Durchbrüche 23 zur Verfügung steht, wohingegen für herabfallende Asche bzw. Glut nur eine verhältnismäßig kleine oder bei senkrechter Randwandung 21 keine vertikale Projektionsfläche als Durchgang zur Verfügung steht.

Zur Aufnahme der Asche bzw. Glut ist das Ascheauffangblech 19 oberseitig muldenförmig ausgebildet, nämlich mit einer Vertiefung 22 versehen. Die Vertiefung 22 kann beispielsweise entsprechend der Grundrissform des Ascheauffangblechs 19 ausgebildet sein, oder je nach Einsatzzweck des Grills eine unterschiedliche Form aufweisen.

Das Ascheauffangblech 19 bildet über dem Boden 20 des Gehäuses 12 eine Luftkammer. Diese Luftkammer befindet sich zwischen der Vertiefung 22 des Ascheauffangblechs 19 und den vom Ascheauffangblech 19 überdeckten Bereich des Bodens 20 des Gehäuses 12. Der Luftraum wird seitlich begrenzt durch die umlaufende Randwandung 21 des Ascheauffangblechs 19. In den Luftraum gelangt Zuluft durch die sich nur im vom Ascheauffangblech 19 überdeckten Bereich des Bodens 20 des Gehäuses 12 befindenden Luftzuführöffnungen 17. Aus dem Luftraum gelangt diese Luft heraus durch die Durchbrüche 23 in der aufrechten bzw. leicht zur Vertikalen geneigten umlaufenden Randwandung 21 des Ascheauffangblechs 19. Auf diese Weise kann die in den Luftraum eintretende Luft durch die Durchbrüche 23 in das Innere des Gehäuses 12 des Kugelgrills 10 gelangen. Dadurch, dass die Zuluft die Durchbrüche 23 von innen, also vom Luftraum aus, in das Innere des Kugelgrills 10 durchströmt, gelangt die Zuluft nicht in die muldenartige Vertiefung 22 an der Oberseite des Ascheauffangblechs 19, wodurch die Zuluft die auf dem Ascheauffangblech 19 gesammelte Asche oder Glut nicht mitnehmen und im Inneren des Gehäuses 12 verteilen kann.

Sollte es vorkommen, dass Glut oder Asche im Umfangsbereich des Ascheauffangblechs 19 anfallen, sammelt sich diese Glut bzw. Asche im Bodenbereich des Gehäuses 12, der das Ascheauffangblech 19, nämlich die ringförmige Randwandung 21 desselben, umgibt. Dadurch, dass die Durchbrüche 23 mit Abstand vom unteren, auf dem Boden 20 des Gehäuses 12 aufliegenden Rand der umlaufenden Randwandung 21 angeordnet sind, kann die sich im die umlaufende Randwandung 21 umgebenden Bereich des Gehäuses 12 sammelnde Asche und Glut nicht durch die Durchbrüche 23 in den Luftraum gelangen, um von dort durch die Luftzufuhröffnungen 17 unter das Ascheauffangblech 19 aus dem Gehäuse 12 des Kugelgills 10 nach außen zu gelangen.

Weitere besondere Maßnahmen betreffen Mittel zur Anordnung von Gegenständen im Inneren des Kugelgrills 10. Zur Anordnung von Ablagen, beispielsweise des Grillrosts 15, Kohlerosts 16 oder Ascheauffangblechs 19 sind mehrere Auflagemittel 24 vorgesehen. Die Auflagemittel 24 sind im Bereich der Innenseite des Unterteils 14 positioniert. Zur sicheren Anordnung der Gegenstände sind dabei jeweils mindestens drei Auflagemittel 24 vorgesehen, auf denen diese aufliegen. Alle Auflagemittel 24, die dem gleichen Gegenstand zugeordnet sind, sind dabei in der gleichen horizontalen Ebene im Unterteil 14 positioniert. Die Auflagemittel 24 erstrecken sich dabei ausgehend von der Innenseite des Unterteils 14 zum Inneren des Gehäuses 12 und können beispielsweise in Form eines Hakens ausgebildet sein.

Die Auflagemittel 24 können lösbar am Unterteil 14 angeordnet sein, beispielsweise mit diesem verschraubt. Vorzugsweise sind den Auflagemitteln 24 jedoch Halter 25 zugeordnet. Die Halter 25 erstrecken sich ausgehend vom Mittelpunkt des Bodens 20 des Unterteils 14 im wesentlichen aufrecht entlang der Innenseite desselben bis zum oberen Rand 26 des Unterteils 14. An jedem Halter 25 sind entsprechend der Anzahl der im Unterteil 14 anzuordnenden Gegenstände eine entsprechende Anzahl von Auflagemitteln 24 angeordnet. Die Auflagemittel 24 sind über entsprechende Verbindungsmittel mit den Haltern 25 verbunden, oder können bei der Herstellung der Halter 25 angeformt werden. Zur Befestigung werden die Halter 25 mit dem Gehäuse 12 verschraubt, oder an dieses angenietet. Die Draufsicht auf das Unterteil 14 in Fig. 2 zeigt drei Halter 25, die im Grundriss sternförmig vom Mittelpunkt des Bodens 20 ausgehend verlaufen. Die Halter 25 sind miteinander im Bereich des Bodens 20 verbunden. An jedem Halter 25 sind zwei Auflagemittel 24 vorgesehen, auf denen der Kohlerost 16 bzw. der Grillrost 15 aufgelegt werden kann. Die Halter 25 sind im Querschnitt flache Gebilde, die derart angeordnet sind, dass sie um ein möglichst geringes Maß zum Inneren des Gehäuses 12 vorspringen. Denkbar ist auch, dass die Halter 25 im Bereich eines freien Endes den oberen Rand 26 des Unterteils 14 umgreifen und auf diese Weise zusätzlich befestigt sind.

Eine weitere Besonderheit betrifft Maßnahmen zur Erzielung eines möglichst schonenden und gleichmäßigen Gar-Effekts. Hierzu wird der verwendete Brennstoff, beispielsweise Holzkohle, beim Grillen in einem oder mehreren separaten, vorzugsweise herausnehmbaren, Behältern 27 angeordnet. Die Behälter 27 befinden sich dabei in herkömmlicher Weise unterhalb der Ebene des Grillguts. Allerdings werden die Behältern 27 nicht direkt unterhalb des Grillguts angeordnet, sondern seitlich außerhalb des Bereichs desselben. Auf diese Weise wird das Grillgut nicht direkt durch die Brennstoffe erhitzt, sondern die durch die Brennstoffe erzeugte Temperatur und Wärmestrahlung wird im Gehäuse 12 aufgestaut bzw. reflektiert, sodass das Grillgut indirekt erhitzt wird. Zweckmäßigerweise erfolgt diese Art des Grillens mit auf das Unterteil 14 aufgesetztem Oberteil 13, also mit geschlossenem Gehäuse 12. Die Anzahl der verwendeten Behälter 27 ist dabei nicht entscheidend; je nach Größe und Art des Grillguts bzw. Volumen des Gehäuses 12, kann es zweckmäßig sein, mehrere Behälter 27 für ein gleichmäßiges Ergebnis zu verwenden. Bei einer geringen Menge Grillgut, oder einem Gehäuse 12 mit geringem Volumen, kann auch ein einzelner Behälter 27 ausreichend sein.

Die Behälter 27 können dabei wie beispielsweise in Fig. 3 dargestellt auf dem Kohlerost 16 positioniert werden. Dabei wird der in das Gehäuse 12 einströmende Luftstrom 31 durch das Aschauffangblech 19 bzw. die Durchbrüche 23 abgelenkt und in Richtung der Behälter 27 geleitet. Denkbar ist es auch, einen oder mehrere Behälter 27 auf dem Grillrost 15 anzuordnen, so dass das Grillgut zwischen den Behältern 27 auf einer Ebene mit demselben angeordnet ist. Weiterhin ist es auch denkbar, einen oder mehrere Behälter 27 auf dem Kohlerost 16 und einen oder mehrere Behälter 27 auf dem Grillrost 15 anzuordnen.

Um die Behälter 27 möglichst weit zum seitlichen Rand des Kohlerosts 16 anzuordnen, ist es von Vorteil, wenn der Grundriss der Behälter 27 an den Grundriss des Gehäuses 12 bzw. des Unterteils 14 angepasst ist. Im gezeigten Ausführungsbeispiel ist daher eine Seitenwand 28 der Behälter 27 im Grundriss kreisförmig ausgebildet entsprechend der Grundrissform des Unterteils 14. Auf diese Weise können die Behälter 27 möglichst weit an den Rand des Kohlerosts 16 oder auch des Grillrosts 15 gestellt werden, wodurch zwischen den einzelnen Behältern 27 ein möglichst großer Zwischenraum verbleibt, in dem das Grillgut angeordnet werden kann. Um die Luftzufuhr zum Brennstoff zu gewährleisten weisen Wandlungen der Behälter 27 Durchbrüche 29 auf. Wie in Fig. 1 ersichtlich, weisen sowohl Seitenwände 28 als auch eine Bodenwand 30 der Behälter 27 derartige Durchbrüche 29 auf.

### Bezugszeichenliste:

- 10: Kugelgrill
- 11: Gestell
- 12: Gehäuse
- 13: Oberteil
- 14: Unterteil
- 15: Grillrost
- 16: Kohlerost
- 17: Luftzuführöffnung
- 18: Abluftöffnung
- 19: Ascheauffangblech
- 20: Boden
- 21: Randwandung
- 22: Vertiefung
- 23: Durchbruch
- 24: Auflagemittel
- 25: Halter
- 26: Rand
- 27: Behälter
- 28: Seitenwand
- 29: Durchbruch
- 30: Bodenwand
- 31: Luftstrom

## Patentansprüche

1. Grilleinrichtung, insbesondere Haubengrill, Kugelgrill (10) oder dergleichen, mit einem vorzugsweise verschließbaren Gehäuse (12), wobei das Gehäuse (12) im unteren Bereich mindestens eine Luftzufuhröffnung (17) aufweist, **dadurch gekennzeichnet, dass** im Gehäuse (12) mindestens ein Mittel zur Aufnahme von Asche und/oder Glut angeordnet ist.

2. Grilleinrichtung nach Anspruch 1, **dadurch gekennzeichnet, dass** das Mittel, insbesondere ein Ascheauffangblech (19), im Bereich zwischen der mindestens einen Luftzufuhröffnung (17) und einer Ablage für Brennstoffe, insbesondere einem Kohlerost (16), angeordnet ist, vorzugsweise das Mittel im Gehäuse (12) gelagert ist, insbesondere von innen auf dem Bodenbereich des Gehäuses anliegt bzw. aufliegt.

3. Grilleinrichtung nach Anspruch 1 oder 2, **dadurch gekennzeichnet, dass** die oder mindestens eine Luftzuführöffnung (17) in einem Bodenbereich, insbesondere eines Unterteils (14), des Gehäuses (12) angeordnet ist.

4. Grilleinrichtung nach einem der vorstehenden Ansprüche, **dadurch gekennzeichnet, dass** das Mittel die Luftzufuhröffnung (17), vorzugsweise alle Luftzufuhröffnungen (17), oberseitig überdeckt, aber nicht verschließt, und vorzugsweise die Grundrissgestalt des Mittels an den Grundriss des Gehäuses (12) angepasst ist.

5. Grilleinrichtung nach einem der vorstehenden Ansprüche, **dadurch gekennzeichnet, dass** das Mittel mindestens bereichsweise umlaufend im Gehäuse (12) anliegt und vorzugsweise das Mittel mindestens einen Durchbruch (23) aufweist, wobei vorzugsweise das Mittel mindestens teilweise muldenförmig ausgebildet ist.

6. Grilleinrichtung nach einem der vorstehenden Ansprüche, **dadurch gekennzeichnet, dass** eine vorzugsweise umlaufende Randwandung (21) des Mittels insbesondere gegenüber dem muldenförmig ausgebildeten Bereich abgewinkelt ist, und der oder jeder Durchbruch (23) im abgewinkelten Randbereich (21) des Mittels angeordnet ist.

7. Grilleinrichtung, insbesondere Haubengrill, Kugelgrill (10) oder dergleichen, mit einem vorzugsweise verschließbaren Gehäuse (12) und mindestens einer im Gehäuse (12) angeordneten Ablage, beispielsweise einem Kohlerost (16), insbesondere nach einem der vorstehenden Ansprüche, **dadurch gekennzeichnet, dass** im Gehäuse (12) Auflagemittel (24) für mindestens die Ablage vorgesehen sind, wobei vorzugsweise mindestens ein Auflagemittel (24) an je einem Halter (25) angeordnet ist und wobei die Auflagemittel (24) und/oder die Halter (25) insbesondere lösbar mit dem Gehäuse (12) verbindbar sind.

8. Grilleinrichtung nach einem der vorstehenden Ansprüche, **dadurch gekennzeichnet, dass** die Halter (25) sich, vorzugsweise aufrecht, entlang von Wandungen des Gehäuses (12) erstrecken, und vorzugsweise die Halter (25) mindestens teilweise untereinander und/oder miteinander verbunden sind, insbesondere im Bereich eines Bodens (20) des Gehäuses (12).

9. Grilleinrichtung nach einem der vorstehenden Ansprüche, **dadurch gekennzeichnet, dass** sich die Halter (25) ausgehend von einem oberen Rand (26) des Gehäuses (12), insbesondere eines Gehäuseunterteils, erstrecken, und vorzugsweise mehrere Halter (25) im Bereich eines oberen freien Endes den oberen Rand (26) des Gehäuses (12) oder des Gehäuseunterteils umgreifen.

10. Grilleinrichtung nach einem der vorstehenden Ansprüche, **dadurch gekennzeichnet, dass** die Halter (25) im Querschnitt eine flache Gestalt aufweisen und vorzugsweise derart im Gehäuse (12) angeordnet sind, dass sie möglichst gering in das Innere des Gehäuses (12) vorspringen.

11. Grilleinrichtung, insbesondere Haubengrill, Kugelgrill (10) oder dergleichen, mit einem vorzugsweise verschließbaren Gehäuse (12), im Gehäuse (12) angeordneten Ablagen für Brennstoffe und für Grillgut, wobei die Ablage für Brennstoffe unterhalb der Ablage für Grillgut angeordnet ist, insbesondere nach einem der vorstehenden Ansprüche, **dadurch gekennzeichnet, dass** der Brennstoff in mindestens einem separaten Behälter (27) angeordnet ist, der auf der Ablage für Brennstoffe und/oder auf der Ablage für Grillgut aufliegt.

12. Grilleinrichtung nach Anspruch 11, **dadurch gekennzeichnet, dass** mehrere Behälter (27) mit vorzugsweise Durchbrüchen (29) in mindestens einigen Wandungen derart auf der Ablage für Brennstoffe, insbesondere einem Kohlerost (16) positionierbar sind, dass zwischen den Behältern (27) ein Raum frei von Brennstoff ist, in dessen Bereich Grillgut auf der Ablage für Grillgut, insbesondere einem Grillrost (15) positionierbar ist.

13. Grilleinrichtung nach einem der vorstehenden Ansprüche, **dadurch gekennzeichnet, dass** die Behälter (27) im Grundriss mindestens teilweise an die Grundrissgestalt des Gehäuses (12) angepasst sind, indem vorzugsweise mindestens eine Seitenwand (28) des jeweiligen Behälters (27) im Grundriss kreisförmig gebogen ausgebildet ist.
